# EUROPEAN PATENT SPECIFICATION

(11) **EP 1 501 326 B1**
(45) Date of publication and mention of the grant of the patent: **29.03.2006**
(21) Application number: 03425412.8
(22) Date of filing: 25.07.2003
(51) Int. Cl.: H04Q 7/38, H04L 12/28, H04L 12/56

(54) **Medium access control method in point-to-multipoint radio systems adopting peripheral stations with adaptive phy mode**
Mediumzugangsteuerverfahren in Punkt-zu-Mehrpunkt Funksystemen mit Randstationen mit adaptiven PHY Modus
Méthode de commande d'accès au support dans des systèmes point à multipoint utilisant des stations périphériques ayant mode phy adaptif

(43) Date of publication of application: 26.01.2005
(73) Proprietor: Siemens Mobile Communications S.p.A., 20126 Milano (IT)
(72) Inventor: Cavalli, Giulio, 20159 Milano (IT); Santacesaria, Claudio, 20100 Milano (IT)
(74) Representative: Giustini, Delio

(56) References cited:
- EP-A- 1 104 216
- WO-A-03/034767
- US-A1- 2002 071 413
- "Technical Specification: Broadband Radio Access Networks (BRAN); HIPERACCESS; DCL protocol specification" ETSI TS 102 000 V1.3.1, December 2002 (2002-12), pages 1, 20-32, 85-113, XP002262985
- "Technical Specification: Broadband Radio Access Networks (BRAN); HIPERACCESS; PHY protocol specification" ETSI TS 101 999 V1.1.1, April 2002 (2002-04), pages 1,13-22, 47-53, XP002262986

## Description

### FIELD OF THE INVENTION

The present invention relates to the field of point-to-multipoint radio systems, and more **MEDIUM ACCESS CONTROL METHOD IN POINT-TO-MULTIPOINT RADIO SYSTEMS ADOPTING PERIPHERAL STATIONS WITH ADAPTIVE PHY MODE** precisely to a medium access control method in point-to-multipoint (PMP) radio systems adopting peripheral stations with adaptive PHY mode.

### BACKGROUND ART

As well known in the art, point-to-multipoint radio systems are characterized by the presence of a master station and a certain number of peripheral stations, also called slaves. Point-to-multipoint radio communications are standardized by relevant ETSI specifications, e.g.: TS 102 000 describes in great details the Data Link Control layer (DLC) and TS 101 999 the physical layer (PHY).

According to the aforementioned standards, the transmissions from the master to the peripheral stations are performed with a broadcast downstream channel, while the transmissions from peripheral stations to the master are performed with an upstream channel (downstream and downlink, so as upstream and uplink are synonyms). To properly realize the transmission from many peripheral stations to the single master on a single channel, the point-to-multipoint system needs a solution to allow effective sharing of the single upstream communication channel and to avoid that each peripheral station, during transmission, could interfere with others. The solution for sharing the physical mean is generally based on time division multiple access (TDMA). Adopting TDMA the single communication channel used to transmit from the peripheral stations- to the master is divisible in bursts and each burst can be reserved to the transmission from a single peripheral station activated in that particular burst by a message, called 'grant', sent by the master on the downstream channel by means of an "upstream map". The grant message specifies the starting instant of the transmission and (either directly or indirectly) the length of the burst, that is the duration of the transmission. Two duplexing modes are known for dividing the upstream from the downstream, namely: time division duplexing (TDD) or frequency division duplexing (FDD). With FDD the upstream transmissions is carried out on a frequency band different than the downstream one; while with TDD the frequency band is the same but different time-intervals occur.

Downstream and upstream channels are divided in frames of the same duration but the second is delayed from the first by a certain amount of time called frame offset (FO). Downstream frames are characterized by a preamble, followed by a control zone where generic information broadcast to all the peripheral stations are inserted, containing the downstream and upstream maps where information about the structure of the current downstream frame and the upstream frame are inserted, followed by data regions where data to be sent to the peripheral stations are inserted. The control zone includes the grant messages addressed to the peripheral stations. The frame offset allows the peripheral to read the control information at the begin of the downstream frame and predispose the uplink transmission, accordingly.

Medium Access Control (MAC) functionality, located within the master, takes care of generating these 'grant' messages in order to satisfy bandwidth requirements of peripheral stations. MAC functionality has to be able also to guarantee that bandwidth assigned to each peripheral station fulfils the quality of service (QoS) parameters of connections belonging to different classes of traffic. Many MAC protocols, with different performances and characteristics, have been described in the known art; for example, the one described in the European Patent application: **EP 98830788.0,** titled: "Method and system to assign transmission bandwidth in both radio and PON (Passive Optical Network) ATM (Asynchronous Transfer Mode) PMP (Point-to-Multipoint) systems", in the name of the same SIEMENS Assignee. According to the cited method, data traffic is subdivided into connections, the connections characterised by the same class of traffic are aggregated into "connection aggregates" with different priority, to each connection aggregate a queue is associated within each peripheral station to store packets also called protocol data units (PDU) until the transmission of the same is enabled, and bandwidth is assigned in uplink through emission of Grants by the Master Station towards-the Peripheral Stations in order to:
- pre-allocate a certain portion of total bandwidth in static modality to various Peripheral Stations on the basis of information about active connections but without considering the status of the queues in the various Peripheral Stations,;
- elaborate instantaneous bandwidth requirement information or "Requests" sent by Peripheral Stations to the Master Station and distribute bandwidth not assigned with previous static technique according to two additional modalities together defined dynamic bandwidth allocation mode including: guaranteed dynamical bandwidth and available dynamic bandwidth.

By the light of the relevant description, the method described above is implementable with uplink TDMA frames subdivided in timeslots of fixed length, each including an ATM cell transmitted, in turn, by the granted peripherals. The number of timeslots in a frame and their duration are both constant, so that the traffic capacity of the frame is fixed. Besides, the grant is always referred to a well precise timeslot of the uplink frame and to a specific connection aggregate. If for example a peripheral shall transmit 4 ATM cells, the master assigns 4 grants to it for the transmission in 4 distinct timeslots, not necessarily consecutive. Other known TDMA systems for transmitting packet data, e.g.: GPRS, 3G UTRAN CDMA, etc., have this type of rigid MAC structure based on timeslots of fixed length.

### OUTLINED TECHNICAL PROBLEM

"Adaptive PHY mode" is a central feature of the new generation point-to-multipoint radio systems. With term "PHY mode" we mean the combination of modulation and FEC (Forwarding Error Check). Each PHY mode is characterized by a different throughput and a different robustness. With the term "adaptive PHY modes" we mean that the transmitting stations, either master or peripherals, are commanded to use a PHY mode for the current transmission selected among a set of possible ones. Data within an upstream burst shall be transmitted with only one PHY mode.

According to the mentioned standards, the length of the uplink bursts is no more fixed but made variable by the introduction of the PHY mode. For example 1,421 symbols are needed for the transmission of 4 ATM cells with the lowest PHY mode, while only 472 symbols are needed if the highest PHY mode is selected. Furthermore, due to the adaptive PHY modes, the traffic capacity of each frame in no more fixed but variable with the PHY modes assigned to the peripherals dynamically. Let us consider the standard frame 1 ms long for the transmission of 22,400 modulation symbols (44.64 Mega-symbols/s); in case all the peripherals are transmitting ATM cells with the lowest PHY mode, 60 cells are transmitted, while with the highest PHY mode the transmitted ATM cells are near 200.

The old MAC protocols are not suitable to exploit the opportunities offered by the latest standardisation, this because the relevant scheduler is designed to assign timeslots of fixed length to the granted peripherals and to consider constant the traffic capacity of the frame. A goal of a smart MAC protocol suitable to be implemented in point-to-multipoint radio systems, but also in GPRS, UMTS, etc., is that of keeping the measured QoS constant making the bandwidth variable in time. Contrarily to the old MACs having the only opportunity of varying the number of granted timeslots to adapt the QoS requirements, an additional opportunity exists with the introduction of adaptive PHY mode techniques which can pursue the same aim by varying the actual PHY mode. Besides, the burst of variable length with the granularity of one modulation symbol allows a fine calibration of the granted bandwidth to adapt the QoS variability, contrarily to the burst of fixed length spanning the discrete steps one timeslot.

The latest standardisation only indicates what the scheduler has to do and provides: the gross structure of the downstream frame, the type of messages at the peripheral stations disposal to request bandwidth, the structure of the polling message and of the grant message, etc. How the scheduler has to operate in the specific, but more in general the MAC protocol, is a matter left open to proprietor's solutions.

With the old MAC protocols, thanks to the fixed nature of the timeslots and the absence of adaptive PHY modes, it can easily plan the transmission intervals of the peripherals everywhere in the frame, so that the instantaneous bandwidth requests from the peripherals can be satisfied with a low delay (lower than the fixed timeslot). This is not always true for a new scheduler that overcomes the rigid time assignment of the old granting strategy, leaving variable the time boundaries of the transmission bursts. The efficient management of the variable traffic capacity due to the adaptive PHY mode by the transmission of burst of variable duration when frames have fixed duration constitutes a difficult task for a MAC protocol.

### OBJECTS OF THE INVENTION

The main object of the present invention is that to indicate a MAC protocol in PMP radio systems able to efficiently elaborate the transmission requests from peripheral stations and distributing the available bandwidth, made variable in time by the adaptive PHY mode, accordingly to the different QoS requirements of the connections and in respect of the latest standardisation requirements.

### SUMMARY AND ADVANTAGES OF THE INVENTION

To achieve said objects the subject of the present invention is a medium access control (MAC) method in a point-to-multipoint (PMP) radio system adopting peripheral stations (PS) with adaptive PHY mode, as disclosed in the relevant method claims.

The core of the MAC protocol of the invention in subject is an upstream scheduler which offers to the master station the opportunity to assign to each peripheral station a single transmission burst of variable length per frame with the minimum granularity of one modulation symbol with the assigned PHY mode, in order to adapt the assigned bandwidth to the instantaneous traffic conditions determined by the transmission requests from the peripherals and, in particular, guarantee a minimum bandwidth defined in the connection set-up phase.

The upstream scheduler is based on modules. Each module is associated to a connection aggregate and it contains, for each peripheral station, the connection parameter information and the requested PDUs the peripheral station has to transmit for the associated connection aggregate. The first module schedules the traffic of the highest priority. The bandwidth for this connection aggregate is pre-allocated during connection set-up and the peripheral stations don't request bandwidth for connections belonging to this connection aggregate. The scheduler translates the bandwidth parameters of the connections belonging to each peripheral station in number of PDUs to be transmitted. The subsequent modules, one for each connection aggregate handled by the master station, schedule traffic based on the replies to the polling, or to the peripheral station requests by means of piggyback and poll-me bit, which are known mechanisms mentioned in the relevant standardisations and in some patent applications of the same SIEMENS Assignee.

The scheduler's modules update the received information during connection set-up and then dynamically in consequence of the above mentioned bandwidth request mechanisms (polling, piggyback and poll-me bit). The number of PDUs that each peripheral station should transmit in each frame is obtained from said modules, and inserted in priority tables, one for each module. The scheduler obtains an upstream map table which contains, for each peripheral station, the cumulative symbols from all the connection aggregates that the peripheral station shall transmit within the next frame. The upstream map table is obtained by scanning the priority tables row-by-row, starting from that one with highest priority in decreasing order, and accumulating the number of PDUs translated into the number of equivalent modulation symbols for the current transmission PHY mode. The scanning of the priority tables for filling up the map table is interrupted when either all the tables have been scanned for all the peripherals or the sum of all the modulation symbols granted exceeds the maximum number of symbols admitted in the frame. In the two cases the scanning of the priority tables restarts at next frame from that one with highest priority. After the uplink map table is completed, the master scans this table row-by-row and stores them sequentially in the control zone of the downlink frame. The granting of the peripherals complies with the sequence stored in the control zone. The master station doesn't specify in the grant which type of PDUs the peripheral station shall transmit, but the master simply communicates to the peripheral the right instant and duration of the transmission. The peripheral station is responsible for distributing the allocated upstream bandwidth in order to fulfil the service parameters negotiated during the connection set-up. The peripheral station is free to use the transmission opportunities to transmit data traffic belonging to whatever connection aggregates.

Differently from the old MAC of the previous citation, the novel MAC has the visibility of the whole frame. In this optic, the instantaneous traffic conditions are considered in the actual frame in order to provide grants for the next frame. Furthermore,- due to the PHY mode and the variable length of the transmission burst, the scheduler takes advantages by issuing only one grant per frame to each peripheral for the transmission with the assigned PHY mode. The cyclical scan of the various priority tables for obtaining unique grants per frame indicating the variable length of the granted burst best complying with the cumulative bandwidth assigned to the various connection aggregates with different QoS, is a novel concept indeed. The novel MAC, issuing grants for cumulative bandwidth, leave the peripheral station free to share the assigned bandwidth at best among the various connection aggregates.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** shows -a functional block representation of a point-to-multipoint radio system operating in accordance with the method of the invention, connected to an ATM network;
- **fig.2** shows three short bursts transmitted by three peripheral stations at the beginning of each upstream frame in reply to the polling;
- **fig.3** shows the piggyback field within the PDU header;
- **fig.4** shows the poll-me bit field within the PDU header;
- **fig.5** shows the uplink and downlink frames received/transmitted by the master station of the system of fig.1 and the corresponding frames transmitted/received by the peripheral stations;
- **figures 6a, 6b,** and **6c** show modules and tables used by the scheduling process for uplink transmissions which belongs to the MAC protocol of the present invention.

### DETAILED DESCRIPTION OF AN EMBODIMENT OF THE INVENTION

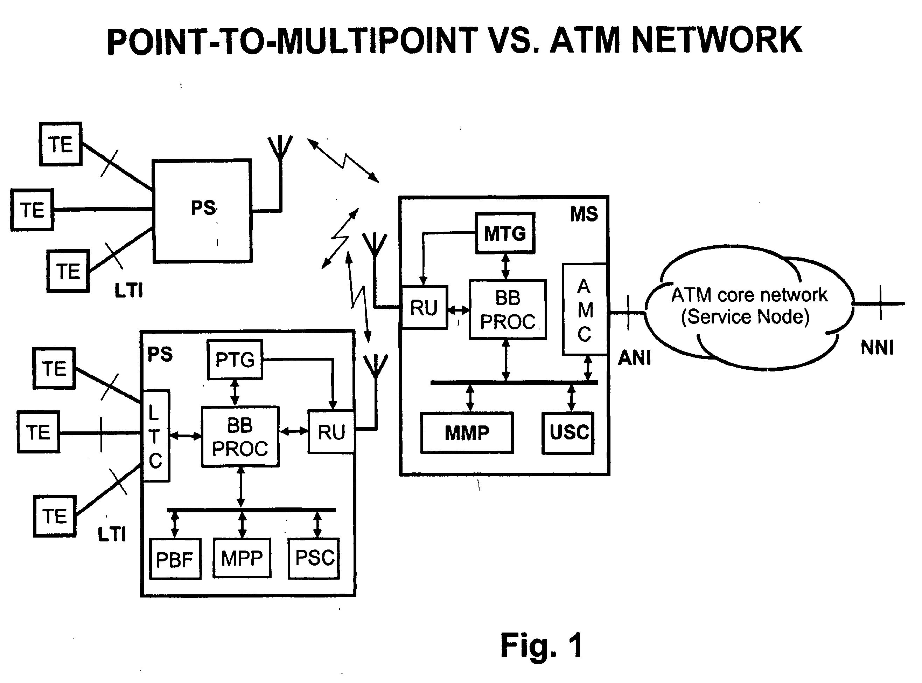

**Fig.1** shows a point-to-multipoint radio system constituted by a Master Station MS connected with several Peripheral Stations PS located in the territory around the MS, and each PS being in its turn connected to several Terminals TE by means of a physical link such as: twisted pair, cable, etc. The master station MS is connected to an ATM core network, preferably by optical link. The following standard interfaces are defined: Node Network Interface (NNI) between the ATM service node and other ATM nodes; ATM Network Interface (ANI) between the ATM service node and the master station MS; the radio interface is schematised by arrows; Local Terminal Interface (LTI) between the peripheral stations and the respective Terminals TE. The master station MS includes the following functional blocks: radio unit RU, master timing generator MTG, baseband processor BB PROC, MAC master processor MMP, uplink scheduler USC, and ATM medium circuits. Each peripheral station PS includes the following functional blocks: line terminal circuits LTC, radio unit RU, peripheral timing generator PTG, baseband processor BB PROC, MAC peripheral processor MPP, peripheral buffer PBF, and peripheral scheduler PSC. The various blocks inside the master MS and peripherals PS are interconnected by means of bi-directional internal buses, as indicated in the figure.

As the operation is concerned, and considering the peripheral station PS at first, the various terminals TE are apparatuses able to transmit and receive: either periodic real time (PRT), real time (RT), or non real time (nRT) signals through the LTI interface provided by the LTC circuits. The latter perform line adaptation, either A/D or D/A conversion, rate matching, either multiplexing or demultiplexing the baseband signals to / from the baseband processor BB PROC. The latter carries out all the baseband operations typical for transmitting and receiving with reliability on the radio channels, such as: TX / RX filtering, FEC-coding/ decoding, interleaving / deinterleaving, scrambling / de-scrambling, ciphering / de-ciphering. The baseband transmission signal is forwarded to the radio unit RU which performs the selected modulation and converts it to IF. The modulated signal is then converted to RF and amplified before conveying it to the antenna for transmission. The received RF signal undergoes the opposite treatment to obtain a baseband reception signal at the BB PROC input. The timing generator PTG includes a stable clock generator (TCXO) and a frequency synthesizer in order to provide all those local oscillator signals and timing references for the correct temporisation of the radio unit RU and the other functional blocks inside the peripheral station PS. Temporisation of the radio unit RU involves transmission and reception by time division in correspondence of the assigned time slots. The baseband processor BB PROC carries out several measures on the received signal, e.g.: transmission delay, power attenuation, quality (BER, BLER, C/I), etc, in order to support at the Master station the main operating procedures, such as Power control and adaptive PHY mode. Because of the non limiting embodiment is referred to an ATM network, a great simplification of the master MS descends by taking the exchanged PDU equal to the payload of one ATM cell. That is, the baseband processor BB PROC is further charged to execute a partial Segmentation and Reassembly (SAR) functionality of ATM. As known, every ATM cell is constituted by 5 octets of the Header plus 48 octets of payload (1 payload octet is reserved for SAR-PDU Header). By means of segmentation each higher layer protocol message originated by a given terminal TE is subdivided into numbered bursts of 47 octets generating a flux of 64 kbit/s. A dual mapping is executed for reassembling.

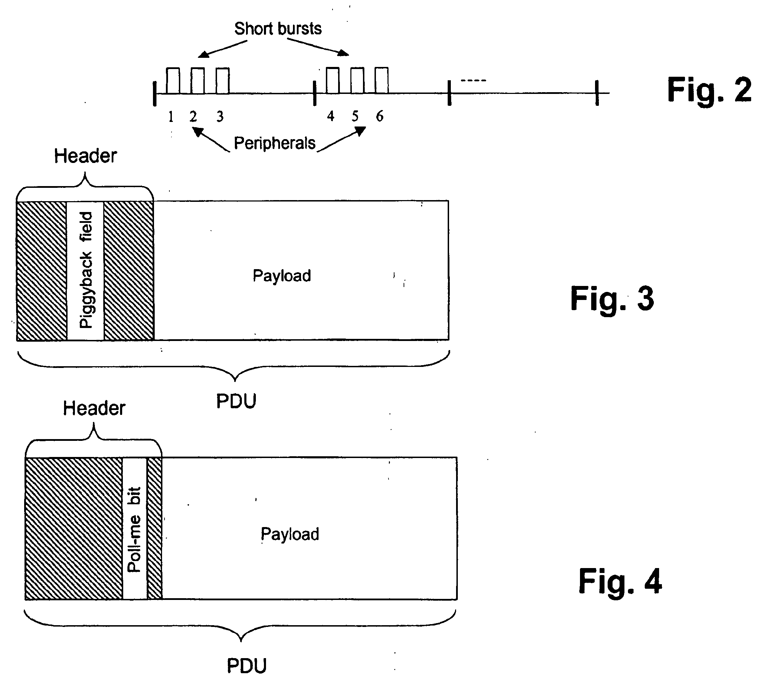

The processor MPP is a functional part of the baseband processor BB PROC deputed to perform operations of the MAC protocol charged to the peripheral station PS. In particular the MPP processor together with the peripheral scheduler PSC and the peripheral buffer PBF provides for:
- Receiving a poll signal from the master MS periodically during the time. Poll is a short granting message transmitted downlink by the master for commanding the transmission of a short signalling burst (mini-slot) in reply by the addressed peripheral.
- Sending to the master station, in response to the polling, a short signalling burst (mini-slot), as in fig.2, including a request to have assigned transmission opportunities; the request including detailed information about queue statuses, subdivided into connection aggregates. Connection aggregates are expressly foreseen in the MAC protocol relevant to the present invention. In particular, four connection aggregates, and relative queues are present, one for each of the following traffic class defined in the international standard specification: periodic real time (PRT), real time (RT), non real time (nRT) and best effort (BE). The four connection aggregates have different priority: PRT has the highest priority; RT has the second priority; nRT has the third priority and BE has the lowest priority. Each class of traffic is associated with one ATM class of traffic, respectively: constant bit-rate (CBR) associated to PRT, variable bit-rate real time (VBRrt) associated to RT, variable bit-rate non real time (VBRnrt) associated to nRT, and unspecific bit-rate (UBR+) associated to BE. The MPP processor of the peripheral station that receives a grant, based on its queue status, decides which queue/s has/have to transmit PDUs.
- Sending to the master station a Piggyback field- (Fig.3) transmitted in the header of every upstream PDU in order to update at the master station the connection aggregate that the connection, transported in the PDU, belongs to. This is an implicit request for grant without waiting for the polling schedule. Piggyback message updates the aggregate queues after the relevant PDUs are transmitted to comply with the received grants.
- Scheduling the traffic of the various queues inside the peripheral buffer PBF.
- Transmitting polling requests (via Poll-me bit) originated by the internal scheduling. Fig.4 shows a Poll-me bit field transmitted in the header of every upstream PDU in order to request polling in advance, if the case is needed. The Poll-me bit feature is configurable during set-up phase of the connections. It's possible to associate the poll-me bit to a subset of the connection aggregates. In preferred embodiment of the invention the poll-me bit is associated only to the connection aggregate RT, that is associated to VBRrt of the ATM service class. In this way it's possible to mange efficiently VBRrt connections. In fact it's possible that a peripheral station has only CBR data to transmit (connection aggregate PRT), and as a consequence, the queue status, at the master station, indicates that the above mentioned peripheral has no traffic for connection aggregate RT to transmit. Then a PDU, belonging to VBRrt traffic, arrives at the peripheral station. All the grants sent to the peripheral are used for CBR traffic, since PRT has the highest priority. With the poll-me bit, transported within the header of every PDU, and transported in this case in the PDUs of the CBR traffic, it's possible to communicate to the master station that the VBRrt queue is not empty, without waiting the polling cycle. When the master receives a poll-me bit request from a peripheral station, the master sends to this peripheral a grant for a long burst. The peripheral doesn't wait until the polling cycle is over for update the queue statues at the master.
- Receiving and making operative the grant commands for UL transmissions. Each individual grant message includes the Peripheral Identifier PID#, the right instant of the transmission and the PHY mode that shall be used for the transmission, but which type of PDUs the peripheral station shall transmit is not specified. Upon a grant command the allocated upstream bandwidth is distributed among the various queues in the PBF buffer as scheduled by PSC.
- Receiving and making operative the PHY mode commands for adaptively transmitting / receiving on the radio channels.

Considering now the master station MS, the processor BB PROC carries out for all the connected peripheral stations those typical baseband operations already described for transmitting and receiving with reliability on the radio channels. The whole baseband transmission signal relevant to all the active peripherals stations is forwarded to the radio unit RU, which performs the selected modulation and converts it to IF. The modulated signal is then converted to RF and power amplified before conveying it to the antenna for transmission. The received RF signal undergoes dual treatments to obtain at the input of the processor BB PROC all the baseband reception signals of the active peripherals. Timing generator MTG is more complex than the companion PTG circuit and includes a more stable clock generator (TCXO). Temporisation of the radio unit RU involves multiplexing of the peripheral bursts into the downlink transmission frames for broadcasting in the cell, and time division reception by a plurality of fixed peripheral stations PS ranging different distances from the master MS. Both the numerical signals from the peripheral stations PS and the ATM signals from the ATM service node are inputted to the ATM medium circuits AMC. These circuits carry out typical operations of the ANI interface to obtain compatibility between digital fluxes at the two ends. In case the physical medium is optical cable, the circuits AMC include: multiplexers / demultiplexers, optical transmitters, and optical receivers. Besides, considering the direction MS → ATM at first, circuits AMC add the ATM header to the PDUs and route the resulting ATM cells on virtual channels and virtual paths mapped into the physical medium. In the opposite direction ATM → MS, circuits AMC analyse the ATM header of the received ATM cells for routeing the payload towards the 64 kbit/s flux associated to the corresponding peripheral stations.

The baseband processor BB PROC carries out several measures on delay, power and quality of the received signal in order to support the main operating procedures. Power control, frame synchronization of the incoming peripherals, and adaptive PHY mode are some examples. The MAC master processor MMP together with the scheduler USC are functional parts of the baseband processor BB PROC deputed to perform the MAC protocol in accordance with the present invention. MAC protocol uses-messages that are sent in both directions to co-ordinate various functional entities (MS and PS): these messages and their interpretation are called MAC protocol. MAC protocol of current invention belongs to a category of protocols without collision, with centralised controller (MAC Master Processor) that is the only entity which can enable transmission of one or another PS. Centralised control allows, in fact, avoiding that, after independent decisions, collisions take place that is more than one PS transmit at the same time with the consequence of lost information. The MMP processor carries out the following operations:
- Polls the peripheral stations PS as indicated in fig.2.
- Receives from the peripheral stations PS (in reply to the polling) the requests to have assigned transmission opportunities, including in the requests detailed information about queue statuses subdivided into connection aggregates (mini-slots).
- Receives the polling requests originated by peripheral stations (poll-me bit).
- Schedules for every single peripheral station, as many queues as the number of connection aggregates.
- Transmits to the peripheral stations the grant commands for UL transmissions, based on the previous scheduling and either the full-duplex or half-duplex capability.
- Based on the quality measures performed by itself and the ones received from the peripheral stations, and further considering the requests for upstream bandwidth, transmits the PHY mode commands to the peripheral stations for adaptively transmitting / receiving on the radio channels.

Now the listed MS operations are better detailed. As the polling is concerned, as shown in fig.2, in every frame three peripheral stations are polled. The polling is performed giving a grant for the transmission of a short burst (mini-slot). If the system is dimensioned for 64 peripheral stations, since the frame duration in a PMP system is 1 ms (one millisecond), every peripheral station is polled at least every 22 ms (22 frames). The polling is performed only among the active peripheral stations and not among all the possible theoretical peripherals. This reduces the polling frequency when few peripherals are -registered, in a particular deployment, at the master station. If only three peripheral stations are registered, every peripheral is polled every frame.

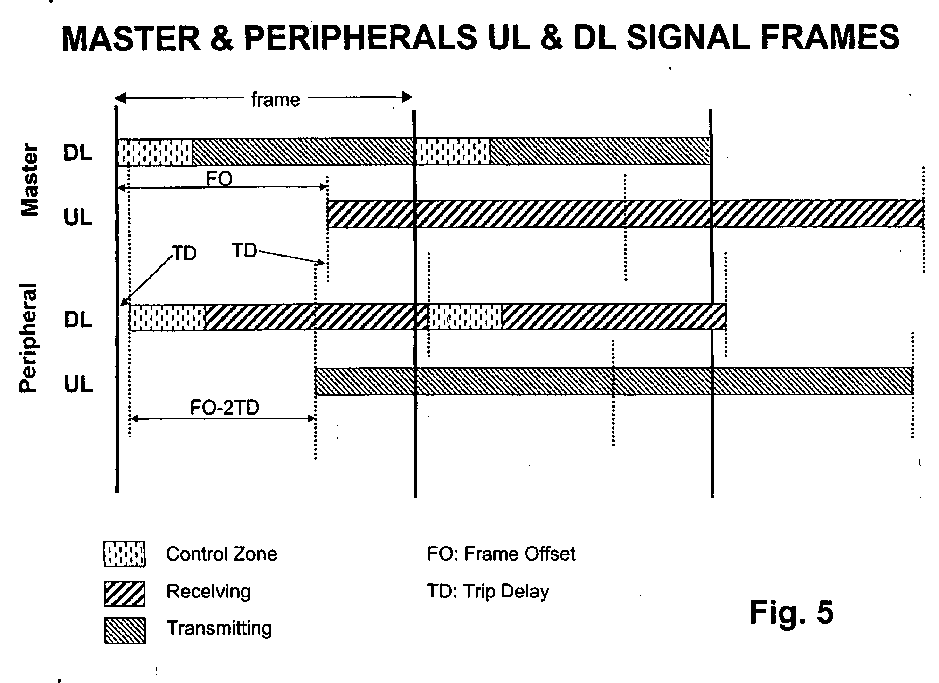

With reference to fig.5, two consecutive downstream frames transmitted by the master station are depicted in the uppermost row (the first). The initial part of every frame, also called control zone, is reserved for management data traffic broadcasted to all the peripherals. The control zone contains the uplink map, thus all the grants to the peripheral stations. The control zone is variable in length but at last it appears not being longer than one quart of the downstream frame. All the peripheral stations shall listen the control zone. The control zone is received by the peripherals after a period of time that depends on the distance of the peripheral to the master. This delay is called trip delay TD. In the second row of fig.5 the upstream frame, received at the master, is depicted. The upstream frame is received by the master after a return delay TD equal to the trip delay TD. Considering the first two rows, the beginning of the upstream frame is shifted from the start of the downstream frame by a frame offset FO inclusive of the round-trip delay 2TD. The frame offset FO is set by the master and communicated to all the peripherals by proper messages. In practice, the master during an initial ranging step evaluates the trip delay TD of each peripheral station and transmits to the peripherals dedicated messages inclusive of the individual trip delay TD. Each peripheral, upon reception of the frame offset FO and the value of its trip delay TD, provides to delay the transmission frames from the received frames by a value equal to: FO - 2TD in order to set the correct frame offset FO at the master. The block MTG in the master and PTG in the peripherals generate the relevant timing. The first two rows of fig.5 are; in practice, the situation of reception of the downstream, and transmission of the upstream, of a peripheral station that is very close to the master station (assuming the delay TD for this peripheral is quite zero).

In the third row of fig.5 the downstream frame, received at the further peripheral station, is depicted. Considering a maximum distance, between peripherals and master station, of 8 km, the maximum propagation delay TD is approximately 30 *µ*s. So, the downstream frame is received in an interval from 0 *µ*s (by the closest peripheral) to 30 *µ*s (by the furthest peripheral). The value of the frame offset FO is exaggerated in figure, in practice its minimum value shall allow the reading of the control zone by the peripheral stations and the relative setting for the correct transmission with the commanded PHY mode, saving time to switch from reception to transmission.

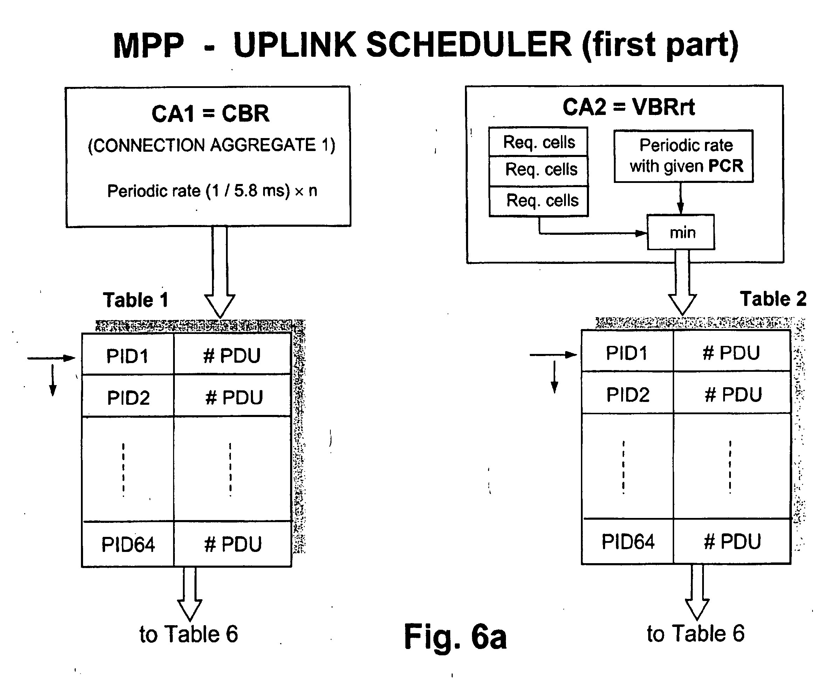

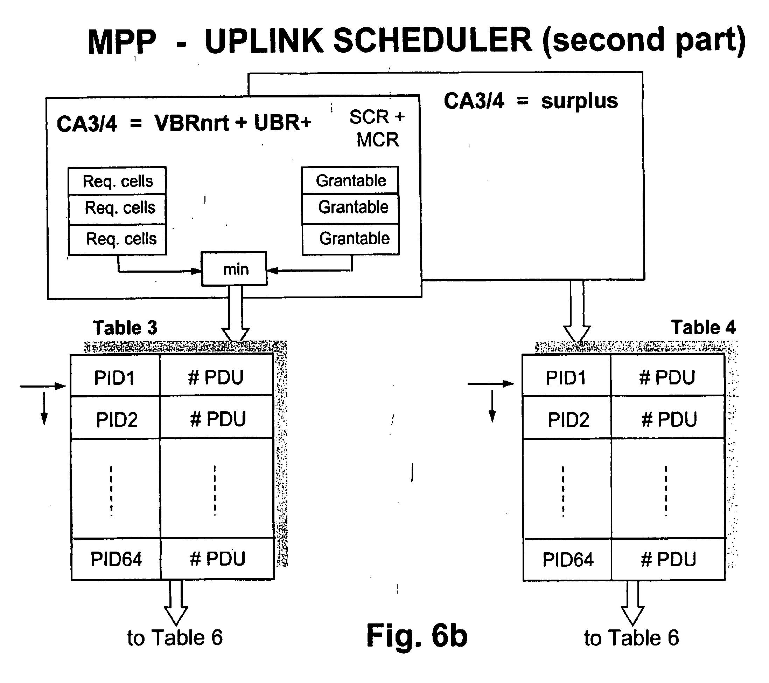

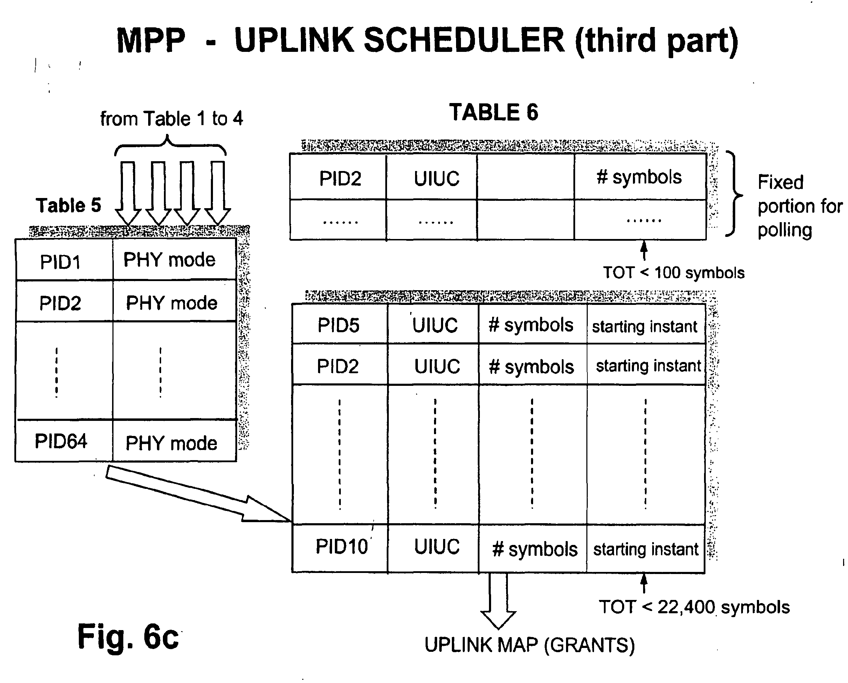

Now, with reference to the **figures 6a, 6b,** and **6c,** the operation of the upstream scheduler USC is described. This scheduler is capable to operate independently of total channel capacity (from a minimum of 10 Mb/s to a maximum of 150 Mb/s). The upstream scheduler is based on three modules CA1, CA2, CA3/4, plus a common part:
- the first module CA1, visible in **fig.6a,** represents traffic belonging to connection aggregate PRT (CBR ATM class of service), which originates a **Table 1;**
- the second module CA2, also visible in **fig.6a,** refers to the connection aggregate RT (VBRrt), which originates a **Table 2;**
- the third module CA3/4, visible in **fig.6b,** refers to the connection aggregates nRT and BE (VBRnrt and UBR+), which originate **Table 3** and **4**, respectively;
- the common part, visible in **fig.6c,** includes a **Table 5** relevant to the PHY mode operation of the peripherals, and a summarizing **Table 6** which represents the uplink map scanned for issuing the grants to the peripherals.

With reference to **fig.6a,** left part, the first module CA1 only includes information of the number "n" of 64 kbit/s channels that the Master station has to provide to every peripheral station. This because CBR traffic is fixedly scheduled without bandwidth requests from the peripherals. In **Table 1** the information of above is translated into the number of PDUs per frame the peripheral shall transmit. Table 1 has room for 64 peripherals (rows) addressed by their peripheral identifiers PID1,.....,PID64. Depending of the value of "n", the master station periodically sends to every peripheral a grant for the transmission of the needed number of PDUs for every single frame. The calculation of the periodicity is a little bit over-dimensioned and it's based, for a 64 kbit/s flow, on one ATM cell every 5.8 ms. As a result, for n=1, the master station sends grants for 5 PDUs every 29 frames, as equi-spaced as possible. For n = 2 the master shall grant 10 PDUs every 29 frames.

With reference to **fig.6a,** right part, the module CA2 includes a list of transmission requests from the peripheral stations to which calculate a minimum granting value for each peripheral. In **Table 2** this information is translated into the number of PDUs per frame the peripheral shall transmit. Table 2 has room for 64 peripherals (rows) addressed by their peripheral identifiers PID1,.....,PID64. The minimum granting value is determined by a trade-off between the requested bandwidth and the peak cell rate (PCR) granted for VBRrt traffic. For every peripheral the master station has the information of the cumulative number of PDUs in the queue for all the VBRrt connections of the peripheral (requested cells). This queue status is updated in real time with the bandwidth request mechanisms (polling, piggyback, - poll-me bit) described above. Moreover the master station has the value of PCR (PDUs per second) that it shall grant for each peripheral station. This is translated, as the CBR case, in the number of theoretical PDUs the master shall grant for each frame, which are calculated on periodical basis, exactly as the module 1 case. The master sends to every peripheral a grant for the transmission of a number of PDUs that is the minimum value between the requested PDUs and the number of PDUs calculated on the basis of PCR. This method ensure the PCR for each peripheral station, but if the peripheral in a given frame has no PDUs in the queue to fill the PCR rate, the bandwidth is not allocated for that peripheral. This method saves the bandwidth from the sustainable cell rate (SCR) to the PCR, granting in any case the PCR. For example, if, from the PCR value, the master has to sends one grant for one PDU in each frame to a peripheral, and that peripheral has requested 250 PDUs, the master gives a grant for only one PDU in every frame. Vice versa, if the master has to give one grant for three PDUs, from the value of the PCR, in every frame but the peripheral has requested only two PDUs, the master sends a grant for only two PDUs in every frame. The opportunity to transmit that one PDU not granted is lost. Once the grants are released, the value of the requested PDUs is not updated, since it will be updated with the first upstream PDU via piggybacking within 2 ms.

With reference to **fig.6b,** the module CA3/4 is divided in two sub-modules. The first sub-module (in foreground) includes a list of transmission requests from the peripheral stations to which calculate a minimum granting value for each peripheral on the basis of the content of a counter corresponding to a "Grantable" field. In **Table 3** this information is translated into the number of PDUs per frame the peripheral shall transmit. Table 3 has room for 64 peripherals (rows) addressed by their peripheral identifiers PID1,.....,PID64. The first sub-module for VBRnrt differs to the CA2 module for VBRrt for the scheduling part that is based not on the theoretical granted PDU number of the PCR, but on the "Grantable" content of the counter that is increased every frame, and decreased once a grant is assigned. The incremental value is calculated by the sum of the SCR and the minimum cell rate (MCR), of all the VBRnrt and UBR+ connections of the peripheral station. For example, if a peripheral has a value of SCR plus MCR of 5 PDUs per frame, the grantable value is increased by 5 at every frame. This field is decremented when the peripheral receives grants for the transmission depending on the requested PDU number. The number of granted PDUs that the peripheral receives is equal to the minimum value between the requested PDUs and the value of "grantable" field. The size of the "grantable" counting value defines the maximum burst size that the peripheral can accumulate, as a consequence of a long period of silence. This counting value cannot be too long but it has to guarantee SCR.

The second sub-module (in background) represents traffic exceeding the minimum granted one; the surplus only refers to the number of requested ATM cells by the peripherals. The master station assigns, with low priority, as many PDUs as requested by the peripheral without the control of fairness among peripherals. In **Table 4** this information is translated into the number of PDUs per frame the peripheral shall transmit. Table 4 has room for 64 peripherals (rows) addressed by their peripheral identifiers PID1,.....,PID64.

With reference to **fig.6c** (left part) the PHY mode **Table** 5 receives inputs from Tables 1 to 4 and outputs information to **Table 6. Table 5** has room for 64 peripherals (rows) addressed by their peripheral identifiers PID1,.....,PID64. Every peripheral identifier PID# is associated to: a field "PHY mode" that is the actual PHY mode that Peripheral shall transmit; a field that indicates the type of duplexing mode either half or full duplex. **Table 6** is built up row-by-row, following the row-by-row scanning of the four tables 1 to 4 carried out by the processor MMP using the information from Table 5 to derive the number of symbols to be transmitted descending from the conversion of the number of granted PDUs, i.e.: the number of PDUs that the peripheral has to transmit stored in Tables 1 to 4. During this scanning process the number of granted symbols are stored into **Table 6.**

With reference to **fig. 6c** (right part) **Table 6,** that stores the uplink scheduling map, is depicted. **Table 6** is top-down partitioned into two sub-tables: the top one is a fixed part of table reserved to the grants for periodically polling the peripherals, as indicated in **fig.2;** the part immediately below is devoted to grant the full-duplex peripherals. **Table 6** has four columns and a variable number of rows. The columns represent in the order: Peripheral Identifiers PID#; Uplink Interval Usage Code UIUC; the equivalent number of symbols for the given PHY mode coming from **Table 5;** and the starting instant of the transmission. The **UIUC** specifies to the granted peripheral the PHY mode used for the transmission, and the burst type (initialisation burst, message burst, contention burst, etc.).

In the operation, from the three modules CA1, CA2, and CA3/4 the number of PDUs to be granted are calculated, for every frame, for every peripheral. These values are grouped per class of traffic, and so per priority, for every peripheral station and inserted in the four **Tables 1** to **4.** These tables are scanned row-by-row in order of priority: first of all **Table 1** completely (PID1 to 64), than **Table 2** (idem), than **Table 3** (idem), and at last **Table 4** (idem), filling the frame of **Table 6,** with the help of **Table 5,** until there is available space. The number of grantable modulation symbols within a frame is 22,400. Finally only one grant is sent to the peripheral to transmit the cumulative traffic of the 4 tables from 1 to 4. Thus, once a peripheral is inserted in **Table 6** for a specific class of traffic, the PDUs from other classes of traffic are summed to that just present in the table and the number of symbols is re-calculated and the starting instants too. During this process, if the frame is filled, the scanning is interrupted. It will restart from Table 1 in the following frame, from the point it was interrupted. Pointers are associated to Table 1 to 4 for supporting the -scan. Two examples are useful to better understand the scanning-process. In the first case when frame 1 is scanned and the 22,400 symbols are completed at PID5, the scan restarts from PID6 of Table 1 at frame 2. In the second case Table 1 is completely scanned at frame 1, Table 2 too, in Table 3 the scan is completed at PID10. The scan restarts from PID1 of Table 1 at frame 2. Tables 1 and 2 are completely scanned at frame 2 without the 22,400 symbols are reached, so as the Table 3 is scanned starting from PID11; and so on.

As above said, **Table 6** is formed by the first fixed part, represented by the grants for short bursts used for replying to the polling. Short signalling PDUs, in short bursts, are transmitted by the peripherals with the most robust PHY mode if the addressed peripheral has no traffic in that frame. Otherwise the short PDUs are transmitted with the PHY mode of the traffic of the addressed peripheral, but always scheduled at the beginning of the upstream frame. This first fixed part reserves space for three short bursts (polling of three peripherals as shown in **fig.2**) and sometimes four (polling plus measurement report). The reserved space usually doesn't exceed 100 symbols. The granted PDUs for all the peripherals follow in **Table 6.** The total number of symbols shall not exceed 22,400. If, during the scanning of the four Tables 1 to 4, this number is reached, the residual granted PDUs for the scanned peripheral are not released, i.e.: neither inserted in Table 6 nor sent to the peripheral in the immediately successive frame but, if it will be enough space, in the following one. So the residual PDUs remain in Table 1 to 4 and the new granted PDUs are summed up to the residual ones.

The sequential order of the rows in **Table 6** also reflects the temporal order of the transmissions from the addressed peripherals (PID#). As an immediate consequence the values of the fields "starting instant of transmission" expressed in number of symbols are increasing from one raw to the successive until the maximum value is reached. Operatively, the master station builds up the next downstream frame by scanning **Table 6** row-by-row (with the exception of the redundant information "# symbols") and the readings are stored in the uplink map within the control zone of the frame, sequentially. Each stored row constitutes a grant message to be issued in the uplink frame. All the peripheral stations shall read the control zone sequentially for understanding the starting point/s and the duration of their transmission/s in the current uplink frame, delayed from the downlink for a time FO-2TD. The length of the transmission is determined by the peripheral station through a simple subtraction of the starting instant included in its own grant message from the staring instant of the grant message immediately successive relevant to another peripheral station. So doing the transmission of redundant information are prevented.

## Claims

1. Method for medium access control in radio systems having a centralized Master Station (MS) connected to a plurality of Peripheral Stations (PS) with adaptive PHY mode capacity, through a downstream channel (DL) divided in frequency from an upstream channel (UL) both subdivided in frames of the same duration, and the upstream channel (UL) being shared among all the Peripheral Stations (PS) enabled, in turn, to transmit upon reception of individual permissions of transmission, called grants, scheduled by the Master Station for complying with Station instantaneous traffic conditions either static or dynamically determined by a filling status of queues inside the Peripheral Stations (PS) associated to different connection aggregates (CA1, CA2, CA3/4) with different priority of service (CBR, VBRrt, VBRnrt, UBR+), **characterised in that** it includes the steps of:
- calculating in a current frame a needed bandwidth for all enabled Peripheral Stations for each connection aggregate (CA1, CA2, CA3/4) and storing results for each aggregate in a respective priority memory (Table1, 2, 3, 4);
- scanning, in turn, the priority memories by Peripheral Station and by decreasing priority (Table1, 2, 3, 4) and accumulating readings relevant to a same Peripheral Station into an upstream memory map (Table 6), obtaining cumulative grants valid for a next frame expressed as the number of modulation symbols with a commanded PHY mode; the scan being suspended at any time during the current frame when the number of modulation symbols achieves a maximum permissible for a frame.

2. The method of the preceding claim, **characterised in that** the upstream memory map (Table 6) is updated at frame period and cyclically scanned with the same cadence by the Master Station (MS) for transmission of grant messages for the cumulative bandwidth.

3. The method of the preceding claim, **characterised in that** the upstream memory map (Table 6) includes an initial portion to store a given number of grants used by the Master Station (MS) for polling the Peripheral Stations (PS) to have back respective transmission requests (n, Req. cells) relevant to said connection aggregates (CA1, CA2, CA3/4).

4. The method of one of the preceding claims, **characterised in that** the step of calculating the needed bandwidth includes the steps of:
- receiving information about a number of streaming channels and respective bit-rate that the Master Station (MS) has to provide to the Peripheral Station (PS) for connection aggregate conveying real time traffic with constant bit-rate (CA1 = CBR);
- translating said information into a number of protocol data units per frame the Peripheral Station (PS) shall transmit;
- inserting the number of protocol data units per frame in the highest priority memory (Table 1).

5. The method of one of the preceding claims, **characterised in that** the step of calculating the needed bandwidth includes the steps of:
- receiving requests (Req. cells) issued by the
- Peripheral Station (PS) for transmission of a given number of protocol data units;
- comparing the given number of protocol data units with a peak traffic (PCR) granted for a connection aggregate conveying real time traffic with variable bit-rate (CA2 = VBRrt);
- inserting in a second higher priority memory (Table 2) a number of protocol data units equal to a minimum value between the requested ones and the granted peak traffic (PCR) .

6. The method of one of the preceding claims, **characterised in that** the step of calculating the needed bandwidth includes the steps of:
- receiving requests (Req. cells) issued by the Peripheral Station (PS) for the transmission of a given number of protocol data units;
- incrementing a counting of grantable protocol data units by a value obtained by summing up a sustainable traffic (SCR) and a minimum traffic (MCR) for a connection aggregate conveying non real time variable bit-rate plus unspecific bit-rate (CA3/4 = VBRnrt) + UBR+);
- decrementing the counting of the grantable protocol data units by a number of protocol-data units granted to the Peripheral Station for the current frame;
- inserting a minimum value between the requested protocol data units and the counting in a third higher priority memory (Table 3).

7. The method of one of the preceding claims, **characterised in that** the step of calculating the needed bandwidth includes the steps of:
- receiving requests (Req. cells) issued by the Peripheral Station (PS) for transmission of a given number of protocol data units;
- translating the given number of protocol data units into the number of protocol data units per frame the peripheral (PS) shall transmit;
- inserting the number of protocol data units per frame in a lowest priority memory (Table 4).

8. The method of one of the preceding claims, **characterised in that** the Peripheral Station (PS) upon reception of a grant message schedules the order of transmission from its internal queues belonging to said connection aggregates with different transmission priority (CA1, CA2, CA3/4).

## Revendications

1. Procédé pour le contrôle d'accès au support dans des systèmes de radio ayant une station maîtresse centralisée (MS) reliée à une pluralité de stations périphériques (PS) avec capacité de mode PHY adaptatif, par le biais d'un canal aval (DL) divisé en fréquence à partir d'un canal amont (UL) tous deux subdivisés en trames de la même durée, et le canal amont (UL) étant partagé entre toutes les stations périphériques (PS) activées, tour à tour, pour émettre à réception d'autorisations à émettre individuelles, appelées attributions, programmées par la station maîtresse pour répondre aux conditions de trafic instantané soit statiques soit déterminées dynamiquement par un état de remplissage de files d'attente à l'intérieur des stations périphériques (PS) associées aux différents agrégats de connexion (CA1, CA2, CA3/4) avec priorité de service différente (CBR, VBRrt, VBRnrt, UBR+), **caractérisé en ce qu'**il comprend les étapes consistant à :
- calculer dans une trame en cours une largeur de bande nécessaire pour toutes les stations périphériques activées pour chaque agrégat de connexion (CA1, CA2, CA3/4) et enregistrer les résultats pour chaque agrégat dans une mémoire de priorité respective (Tableau 1, 2, 3, 4)
- balayer, tour à tour, les mémoires de priorité par station périphérique et, en diminuant la priorité (Tableau 1, 2, 3, 4) et en accumulant les lectures appropriées à une même station périphérique dans une carte de la mémoire en amont (Tableau 6), obtenir des attributions cumulatives valables pour une trame suivante exprimées comme le nombre de symboles de modulation avec un mode PHY commandé ; l'analyse étant suspendue à tout moment pendant la trame en cours quand le nombre de symboles de modulation atteint un maximum admissible pour une trame.

2. Procédé selon la revendication précédente, **caractérisé en ce que** la carte de la mémoire en amont (Tableau 6) est mise à jour à la période de trame et balayée cycliquement avec la même cadence par la station maîtresse (MS) pour la transmission des messages d'attribution pour la largeur de bande cumulative.

3. Procédé selon la revendication précédente, **caractérisé en ce que** la carte de la mémoire en amont (Tableau 6) comprend une partie initiale pour enregistrer un nombre donné d'attributions utilisées par la station maîtresse (MS) pour interroger les stations périphériques (PS) pour avoir en retour des demandes de transmission respectives (cellules Req. n,) concernant lesdits agrégats de connexion (CA1, CA2, CA3/4).

4. Procédé selon l'une des revendications précédentes, **caractérisé en ce que** l'étape de calcul de la largeur de bande nécessaire comprend les étapes consistant à :
- recevoir des informations concernant un certain nombre de canaux de transmission et un débit respectif que la station maîtresse (MS) doit fournir à la station périphérique (PS) pour l'agrégat de connexion transportant un trafic en temps réel avec un débit constant (CA1 = CBR) ;
- convertir lesdites informations en un certain nombre d'unités de données de protocole par trame que la station périphérique (PS) devra transmettre ;
- insérer le nombre d'unités de données de protocole par trame dans la mémoire de priorité la plus haute (Tableau 1).

5. Procédé selon l'une des revendications précédentes, **caractérisé en ce que** l'étape de calcul de la largeur de bande nécessaire comprend les étapes consistant à :
- recevoir des demandes (cellules Req.) émises par la station périphérique (PS) pour la transmission d'un nombre donné d'unités de données de protocole ;
- comparer le nombre donné d'unités de données de protocole avec un trafic maximal (PCR) octroyé pour un agrégat de connexion transportant du trafic en temps réel avec débit variable (CA2 = VBRrt) ;
- insérer dans une mémoire de deuxième priorité plus haute (Tableau 2) un certain nombre d'unités de données de protocole égal à une valeur minimale entre celles qui sont demandées et le trafic maximal octroyé (PCR).

6. Procédé selon l'une des revendications précédentes, **caractérisé en ce que** l'étape de calcul de la largeur de bande nécessaire comprend les étapes consistant à :
- recevoir des demandes (cellules Req.) émises par la station périphérique (PS) pour la transmission d'un nombre donné d'unités de données de protocole ;
- incrémenter un comptage d'unités de données de protocole pouvant être octroyées d'une valeur obtenue en faisant la somme d'un trafic soutenu (SCR) et d'un trafic minimal (MCR) pour un agrégat de connexion transmettant un débit non en temps réel variable plus un débit non spécifique (CA3/4 = VBRnrt + UBR+) ;
- diminuer par incrément le comptage des unités de données de protocole pouvant être octroyées d'un certain nombre d'unités de données de protocole octroyées à la station périphérique pour la trame en cours ;
- insérer une valeur minimale entre les unités de données de protocole demandées et le comptage dans une troisième mémoire de priorité plus haute (Tableau 3).

7. Procédé selon l'une des revendications précédentes, **caractérisé en ce que** l'étape de calcul de la largeur de bande nécessaire comprend les étapes consistant à :
- recevoir des demandes (cellules Req.) émises par la station périphérique (PS) pour la transmission d'un nombre donné d'unités de données de protocole ;
- convertir le nombre donné d'unités de données de protocole en le nombre d'unités de données de protocole par trame que la station périphérique (PS) devra transmettre ;
- insérer le nombre d'unités de données de protocole par trame dans une mémoire de priorité la plus basse (Tableau 4).

8. Procédé selon l'une des revendications précédentes, **caractérisé en ce que** la station périphérique (PS) à réception d'un message d'attribution programme l'ordre de transmission à partir de ses files d'attente internes appartenant auxdits agrégats de connexion avec une priorité de transmission différente (CA1, CA2, CA3/4).

## Patentansprüche

1. Verfahren für eine Mediumzugangssteuerung in Funksystemen mit einer zentralisierten Master-Station (MS), die mit einer Vielzahl von Peripherie-Stationen (PS) mit adaptiven PHY-Modus-Fähigkeiten über einen Abwärtsstromkanal (DL) verbunden ist, der sich frequenzmäßig von einem Aufwärtsstromkanal (UL) unterscheidet, wobei beide in Rahmen der gleichen Dauer unterteilt sind und der Aufwärtsstromkanal (UL) wiederum von allen Peripherie-Stationen (PS) gemeinsam genutzt wird, um auf den Empfang einer individuellen Übertragungserlaubnis hin, Freigabe genannt und von der Master-Station statisch oder dynamisch zeitlich gesteuert, zu senden, um eine Übereinstimmung mit den momentanen Verkehrsbedingungen zu erzielen, die durch einen Füllzustand von Warteschlangen innerhalb der Peripherie-Stationen (PS) bestimmt werden, die unterschiedlichen Verbindungsbündelungen (CA1, CA2, CA3/4) mit unterschiedlichen Dienstprioritäten (CBR, VBRrt, VBRnrt, UBR+) zugeordnet sind, **dadurch gekennzeichnet, dass** das Verfahren die folgenden Schritte beinhaltet:
- Berechnen einer benötigten Bandbreite in einem aktuellen Rahmen für alle aktivierten Peripherie-Stationen für jede Verbindungsbündelung (CA1, CA2, CA3/4) und Speichern der Ergebnisse für jede Bündelung in einem jeweiligen Prioritätsspeicher (Tabelle 1, 2, 3, 4);
- anschließendes Abtasten der Prioritätsspeicher durch die Peripherie-Station und durch Herabsetzen der Priorität (Tabelle 1, 2, 3, 4) und Kumulieren der für eine gleiche Peripherie-Station relevanten Auslesewerte in einem Aufwärtsstrom-Speicherabbild (Tabelle 6), um kumulative, für einen nächsten Rahmen gültige Freigaben zu erhalten, die als Anzahl von Modulationssymbolen mit einem angewiesenen PHY-Modus ausgedrückt werden; wobei das Abtasten jederzeit im laufenden Rahmen unterbrochen wird, wenn die Anzahl der Modulationssymbole einen zulässigen Maximalwert für einen Rahmen übersteigt.

2. Verfahren nach dem vorhergehenden Anspruch, **dadurch gekennzeichnet, dass** das Aufwärtsstrom-Speicherabbild (Tabelle 6) während der Rahmenperiode aktualisiert wird und von der Master-Station (MS) zyklisch im gleichen Takt abgetastet wird wie für die Übertragung der Freigabenachrichten für die kumulative Bandbreite.

3. Verfahren nach dem vorangehenden Anspruch, **dadurch gekennzeichnet, dass** das Aufwärtsstrom-Speicherabbild (Tabelle 6) einen Anfangsteil enthält, um eine bestimmte Anzahl von Freigaben zu speichern, die von der Master-Station (MS) zum Abfragen der Peripherie-Stationen (PS) verwendet werden, um jeweilige Übertragungsanbanfragen zurückzuerhalten (n, Anf. Zellen), die für die Verbindungsbündelungen relevant sind (CA1, CA2, CA3/4).

4. Verfahren nach einem der vorhergehenden Ansprüche, **dadurch gekennzeichnet, dass** der Schritt der Berechnung der benötigten Bandbreite die folgenden Schritte beinhaltet:
- Empfangen von Informationen über eine Anzahl von Datenstromkanälen und eine entsprechende Bitrate, die die Master-Station (MS) der Peripherie-Station (PS) für die Verbindungsbündelung zur Verfügung stellen muss, die Echtzeit-Verkehr mit konstanter Bitrate (CA1 = CBR) befördert;
- Übersetzen der besagten Informationen in eine Anzahl von Protokolldaten-Einheiten pro Rahmen, die die Peripherie-Station (PS) senden muss;
- Einfügen der Anzahl von Protokolldaten-Einheiten pro Rahmen in den Speicher mit der höchsten Priorität (Tabelle 1).

5. Verfahren nach einem der vorhergehenden Ansprüche, **dadurch gekennzeichnet, dass** der Schritt der Berechnung der benötigten Bandbreite die folgenden Schritte beinhaltet:
- Empfangen von Anforderungen (Anf. Zellen), die von der Peripherie-Station (PS) zum Übertragen einer bestimmten Anzahl von Protokolldaten-Einheiten ausgegeben werden;
- Vergleichen der bestimmten Anzahl von Protokolldaten-Einheiten mit einem Spitzenverkehrswert (PCR), freigegeben für eine Verbindungsbündelung, die in Echtzeit Verkehr mit variabler Bitrate (CA2 = VBRrt) transportiert;
- Einfügen einer Anzahl von Protokolldaten-Einheiten in einen zweiten Speicher mit höherer Priorität (Tabelle 2), wobei die Anzahl gleich einem Mindestwert zwischen den angeforderten und dem freigegebenen Spitzenverkehr (PRC) ist.

6. Verfahren nach einem der vorhergehenden Ansprüche, **dadurch gekennzeichnet, dass** der Schritt der Berechnung der benötigten Bandbreite die folgenden Schritte beinhaltet:
- Empfangen von Anforderungen (Anf. Zellen), die von der Peripherie-Station (PS) zur Übertragung einer bestimmten Anzahl von Protokolldaten-Einheiten ausgegeben wurden;
- Erhöhen eines Zählwerts von freigebbaren Protokolldaten-Einheiten um einen Wert, der durch die Aufsummierung eines Dauerverkehrs (SCR) und eines Minimalverkehrs (MCR) für eine Verbindungsbündelung erhalten wird, die in Nichtechtzeit eine variable Bitrate plus einer unspezifischen Bitrate (CA3/4 = VBRnrt + UBR+) transportiert;
- Vermindern des Zählwerts der freigebbaren Protokolldaten-Einheiten um eine Anzahl von Protokolldaten-Einheiten, die für die Peripherie-Station für den aktuellen Rahmen freigegeben wurden;
- Einfügen eines Mindestwerts zwischen die angeforderten Protokolldaten-Einheiten und den Zählwert in einem dritten Speicher mit höherer Priorität (Tabelle 3).

7. Verfahren nach einem der vorhergehenden Ansprüche, **dadurch gekennzeichnet, dass** der Schritt des Berechnens der benötigten Bandbreite die folgenden Schritte beinhaltet:
- Empfangen von Anforderungen (Anf. Zellen), die von der Peripherie-Station (PS) für die Übertragung einer bestimmten Anzahl von Protokolldaten-Einheiten ausgegeben wurde;
- Übersetzen der bestimmten Anzahl von Protokolldaten-Einheiten in die Anzahl von Protokolldaten-Einheiten pro Rahmen, die von der Peripherie-Station (PS) gesendet werden sollen;
- Einfügen der Anzahl von Protokolldaten-Einheiten pro Rahmen in einen Speicher mit der niedrigsten Priorität (Tabelle 4).

8. Verfahren nach einem der vorhergehenden Ansprüche, **dadurch gekennzeichnet, dass** die Peripherie-Station (PS) auf den Empfang einer Freigabenachricht hin die Reihenfolge von Übertragungen von ihren internen Warteschlangen, die zu den besagten Verbindungsbündelungen mit unterschiedlicher Ubertragungspriorität gehören, zeitlich steuert (CA, CA2, CA3/4).
